# DEMANDE DE BREVET EUROPEEN

(11) **EP 2 489 958 A1**
(43) Date de publication de la demande: **22.08.2012**
(21) Numéro de dépôt: 12155920.7
(22) Date de dépôt: 17.02.2012
(51) Int. Cl.: F24J 2/04, F24J 2/52, F24J 2/46

(54) **Structure de montage, kit pour la réalisation d'une telle structure, système de récupération d'énergie solaire comprenant une telle structure et installation comprenant un tel système**

(30) Priorité: 18.02.2011 FR 1151339
(71) Demandeur: Tenesol, 69890 La Tour de Salvagny (FR)
(72) Inventeur: Carre, Guillaume, 69005 LYON (FR)
(74) Mandataire: Cabinet Plasseraud

(57) **Abrégé**

Structure de montage pour monter deux panneaux de récupération d'énergie solaire sur un bâti, comprenant :
- deux rails (20) comportant chacun :
un socle (21) comportant intérieurement un logement (L),
une partie de maintien (40) sur laquelle un bord de l'un des panneaux de récupération est destiné à reposer,

- une éclisse (140),
dans laquelle le socle (21) comprend une première partie (27) portant la partie de maintien (40), et une deuxième partie (28) s'étendant perpendiculairement depuis la première partie (27), le logement (L) étant formé dans les première (27) et deuxième (28) parties, et
dans laquelle l'éclisse (140) comporte :
un pied (141) placé dans une portion du logement (L) formée dans les première (27) et deuxième (28) parties du socle de chacun des rails (20),
une âme (150) placée dans une portion du logement (L) formée dans la première partie (27) du socle (21) de chacun des rails (20).

## Description

L'invention se rapporte à une structure de montage, à un kit pour la réalisation d'une telle structure, à un système de récupération d'énergie solaire comprenant une telle structure et à une installation comprenant un tel système.

En particulier, l'invention se rapporte à une structure de montage pour monter au moins deux panneaux de récupération d'énergie solaire sur un bâti, chacun desdits panneaux de récupération présentant au moins un bord, ladite structure de montage comprenant :
- au moins deux rails s'étendant selon une direction longitudinale d'un plan horizontal, chacun desdits rails comportant :
   un socle présentant une surface inférieure horizontale destinée à reposer sur le bâti et des première et deuxième extrémités opposées, écartées l'une de l'autre selon la direction longitudinale, ledit socle comportant intérieurement un logement ouvert selon la direction longitudinale aux première et deuxième extrémités, ledit socle étant destiné à être fixé au bâti,
   une partie de maintien portée par le socle et s'étendant selon une direction verticale perpendiculaire au plan horizontal, à l'opposé de la surface inférieure du socle, ladite partie de maintien présentant au moins une surface d'appui horizontale sur laquelle l'un, longitudinal, des bords des panneaux de récupération est destiné à reposer,
- au moins une éclisse s'étendant selon la direction longitudinale et adaptée pour être insérée dans une portion du logement du socle de l'un des rails par la première extrémité et dans une portion du logement du socle de l'autre rail par la deuxième extrémité.

Dans des structures de montage connues de ce type, l'éclisse réalise une liaison entre deux rails placés bout à bout selon la direction longitudinale.

L'invention vise à améliorer la liaison entre les deux rails.

A cet effet, l'invention propose une structure de montage du type précité dans laquelle le socle de chacun des rails comprend une première partie s'étendant selon la direction verticale et portant la partie de maintien, et au moins une deuxième partie s'étendant depuis la première partie selon une direction transversale du plan horizontal, perpendiculaire aux directions longitudinale et verticale, lesdites première et deuxième parties du socle portant la surface inférieure, le logement étant formé dans les première et deuxième parties, et
dans laquelle l'éclisse comporte :
un pied présentant une surface inférieure horizontale reposant sur le socle et un bord, ledit pied étant placé dans la portion du logement formée dans les première et deuxième parties du socle de chacun des rails,
une âme portée par le pied et s'étendant selon la direction verticale, ladite âme étant agencée à distance, selon la direction transversale, du bord du pied, l'âme étant placée dans la portion du logement formée dans la première partie du socle de chacun des rails.

Ainsi, l'éclisse qui présente une forme complémentaire de celle du logement du rail a une inertie analogue à celle du rail de sorte à assurer une continuité mécanique dans la reprise des efforts entre les rails.

Selon des dispositions particulières, l'invention permet également d'assurer une continuité de drainage pour drainer l'eau s'infiltrant entre les rails.

Dans des modes de réalisation, l'invention peut comprendre une ou plusieurs des dispositions suivantes :
- l'âme de l'éclisse occupe l'essentiel de la portion du logement formée dans la première partie du socle,
- chacun des rails comporte en outre au moins une conduite de drainage délimitée par la partie de maintien et une paroi portée par la deuxième partie du socle à distance, selon la direction transversale, de la partie de maintien, ladite paroi s'étendant sensiblement selon direction verticale, à l'opposé de la surface inférieure du socle, le pied comportant une conduite de drainage agencée en correspondance selon la direction verticale avec la conduite de drainage de chacun des rails,
- le socle de chacun des rails comprend des première et deuxième parois délimitant entre elles le logement, la première paroi étant horizontale et portant la surface inférieure du socle et la deuxième paroi comportant une nervure centrale et au moins un flasque latéral adjacent, selon la direction transversale, à la nervure centrale, la nervure centrale étant agencée en regard et à une première distance, selon la direction verticale, d'une première portion de la première paroi avec laquelle ladite nervure centrale forme la première partie du socle, le flasque latéral étant agencé en regard et à une deuxième distance, selon la direction verticale, d'une deuxième portion de la première paroi avec laquelle ledit flasque latéral forme la deuxième partie du socle, la première distance étant supérieure à la deuxième distance, le pied de l'éclisse reposant sur la première paroi et l'âme de l'éclisse s'étendant dans la nervure centrale,

- un espace libre est ménagé entre le pied de l'éclisse et le flasque latéral de la deuxième paroi du socle, l'espace libre occupant l'essentiel de la portion du logement formée dans la deuxième partie du socle,
- le flasque latéral de la deuxième paroi du socle comporte une portion de liaison adjacente à la nervure centrale, ladite portion de liaison étant inclinée vers la première paroi du socle, l'âme de l'éclisse comprenant une languette inclinée vers le pied de l'éclisse et s'étendant parallèlement et au voisinage de la portion de liaison,
- le socle de chacun des rails comprend en outre au moins une troisième partie s'étendant selon la direction verticale, ladite troisième partie étant adjacente, selon la direction transversale, à la deuxième partie, à l'opposé de la première partie, le logement étant formé en outre dans la troisième partie, l'éclisse comportant en outre au moins une aile s'étendant selon la direction verticale depuis le pied, ladite aile étant agencé à distance, selon la direction transversale, de l'âme, ladite aile s'étendant dans la portion du logement formée dans la troisième partie du socle de chacun des rails,
- la deuxième paroi du socle comporte en outre au moins une nervure latérale adjacente, selon la direction transversale, au flasque latéral, à l'opposé de la nervure centrale, la nervure latérale étant agencée en regard et à une hauteur, selon la direction verticale, d'une troisième portion de la première paroi avec laquelle ladite nervure latérale forme la troisième partie du socle, la hauteur étant comprise entre les première et deuxième distances, l'aile de l'éclisse s'étendant dans la nervure latérale,
- l'aile de l'éclisse occupe l'essentiel de la portion du logement formée dans la troisième partie du socle,
- le socle de chacun des rails comprend deux deuxièmes parties s'étendant de part et d'autre de la première partie.

Selon un deuxième aspect, l'invention concerne un kit pour la réalisation d'une structure de montage telle que définie précédemment, comprenant :
- au moins deux rails s'étendant chacun selon une direction d'extension et comportant chacun :
   un socle présentant une surface inférieure plane et des première et deuxième extrémités opposées, écartées l'une de l'autre selon la direction d'extension du rail, ledit socle comportant intérieurement un logement ouvert selon la direction d'extension du rail aux première et deuxième extrémités,
   une partie de maintien portée par le socle et s'étendant selon une direction perpendiculaire à la surface inférieure du socle, à l'opposé de ladite surface inférieure, ladite partie de maintien présentant au moins une surface d'appui parallèle à la surface inférieure du socle,
- au moins une éclisse s'étendant selon une direction d'extension de l'éclisse et adaptée pour être insérée dans une portion du logement du socle de l'un des rails par la première extrémité et dans une portion du logement du socle de l'autre rail par la deuxième extrémité,
   dans lequel le socle de chacun des rails comprend une première partie s'étendant selon la direction perpendiculaire à la surface inférieure du socle et portant la partie de maintien, et au moins une deuxième partie s'étendant depuis la première partie selon une direction perpendiculaire à la direction d'extension du rail, lesdites première et deuxième parties du socle portant la surface inférieure, le logement étant formé dans les première et deuxième parties, et
   dans lequel l'éclisse comporte :
   un pied présentant une surface inférieure plane et un bord,
   une âme portée par le pied et s'étendant selon une direction perpendiculaire à la surface inférieure du pied, ladite âme étant agencée à distance, selon une direction perpendiculaire à la direction d'extension de l'éclisse, du bord du pied.

Selon un troisième aspect, l'invention concerne un système de récupération d'énergie solaire comprenant :
- une structure de montage telle que définie précédemment, l'éclisse étant insérée dans la portion du logement du socle de l'un des rails par la première extrémité et dans la portion du logement du socle de l'autre rail par la deuxième extrémité, la surface inférieure du pied de l'éclisse reposant sur les socles, le pied de l'éclisse étant placé dans la portion du logement formée dans les première et deuxième parties du socle de chacun des rails et l'âme de l'éclisse étant placée dans la portion du logement formée dans la première partie du socle de chacun des rails,
- au moins deux panneaux de récupération d'énergie solaire, chacun desdits panneaux de récupération présentant au moins un bord longitudinal reposant sur la surface d'appui de l'un des rails.

Selon un quatrième aspect, l'invention concerne une installation comprenant un système de récupération d'énergie solaire tel que défini précédemment, et un bâti sur lequel la surface inférieure du socle du rail repose et auquel le socle du rail est fixé.

D'autres objets et avantages de l'invention apparaîtront à la lecture de la description qui suit d'un mode de réalisation particulier de l'invention donné à titre d'exemple non limitatif, la description étant faite en référence aux dessins annexés dans lesquels :
- la figure 1 est une représentation en perspective d'une installation comprenant un bâti sous la forme d'une charpente d'un toit, et un système de récupération d'énergie solaire comprenant des panneaux de récupération d'énergie solaire et une structure de montage des panneaux de récupération sur la charpente,
- la figure 2 est une représentation en coupe partielle selon l'orientation référencée 11-11 sur la figure 1, illustrant une section transversale d'un rail et d'un profilé de contre-appui de la structure de montage,
- la figure 3 est une représentation en coupe partielle selon l'orientation référencée III-III sur la figure 1, illustrant une section transversale d'une traverse et d'un profilé de contre-appui de la structure de montage,
- la figure 4 est une représentation en perspective partielle d'une étape d'un procédé de montage du système de récupération sur la charpente, illustrant le montage de dispositifs de remplissage entre des rails fixés à la charpente,
- la figure 5 est une représentation en perspective d'une étape du procédé de montage, illustrant le montage bout à bout de deux rails par l'intermédiaire d'une éclisse placée dans des logements respectifs des rails,
- la figure 6 est une représentation en coupe selon l'orientation référencée VI-VI sur la figure 5, illustrant une section transversale du rail et de l'éclisse,
- la figure 7 est une représentation en coupe partielle selon l'orientation référencée VII-VII sur la figure 4, illustrant un bord du dispositif de remplissage fixé au rail entre un organe de bridage du rail et une bride,
- la figure 8 est une représentation en coupe partielle selon l'orientation référencée III-III sur la figure 1 de deux étapes du procédé de montage, illustrant le montage de la traverse sur les rails après que le panneau de récupération a été monté sur les rails, la traverse étant mise dans une première position représentée en trait mixte pour permettre l'introduction d'une aile sous un bord du panneau de récupération, puis dans une deuxième position représentée en trait plein pour permettre la fixation de la traverse aux rails,
- la figure 9 est une représentation en perspective partielle selon l'orientation référencée IX-IX sur la figure 1, illustrant le positionnement relatif du rail et de la traverse dans la structure de montage.

Sur les figures, les mêmes références désignent des éléments identiques ou analogues.

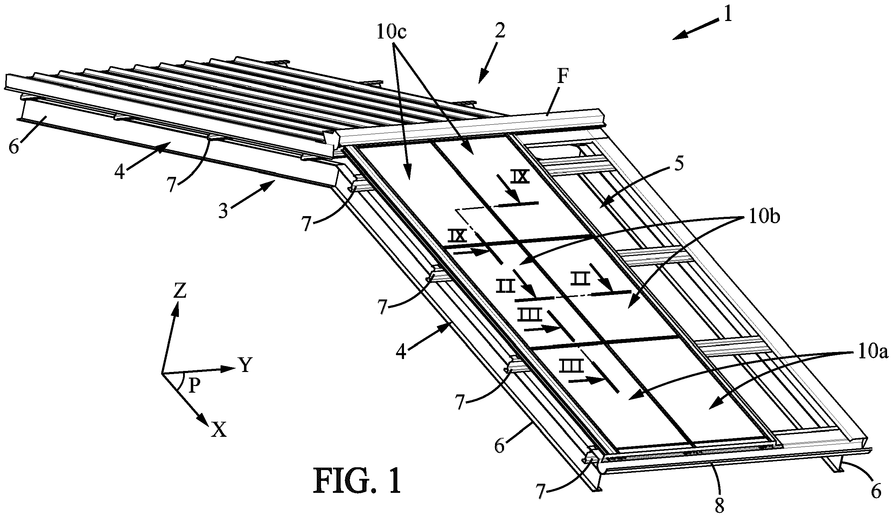

La figure 1 représente une installation 1 comprenant un bâti et un système de récupération d'énergie solaire 5 monté sur le bâti.

Dans le mode de réalisation représenté, le bâti est une charpente 3 du toit 2 d'un bâtiment. La charpente 3 présente un faîte F depuis lequel s'étendent deux pans 4 en pente, avec une inclinaison généralement comprise en 10° et 80°. Chacun des pans 4 de la charpente 3 comprend deux poutres 6 s'étendant parallèlement l'une à l'autre dans le sens de la pente, et quatre pannes 7 s'étendant parallèlement les unes aux autres, entre les poutres 6, transversalement à la pente. Dans d'autres modes de réalisation, le bâti pourrait également être un châssis présentant une pente ou non, et destiné à être posé sur une charpente 3, sur une façade d'un bâtiment, sur un sol ou tout autre surface.

Le système de récupération d'énergie solaire 5 est monté sur l'un des pans 4 de la charpente 3. Pour la suite de la description, le pan 4 sur lequel le système de récupération d'énergie solaire 5 est monté établit un plan P défini comme étant horizontal et comprenant une direction longitudinale X, dans le sens de la pente, et une direction transversale Y, perpendiculaire à la direction longitudinale X et donc transversale à la pente. On définit également une direction verticale Z perpendiculaire au plan horizontal P et aux directions longitudinale X et transversale Y.

Le système de récupération d'énergie solaire 5 comprend plusieurs panneaux de récupération d'énergie solaire, dont six sont représentes sur la figure 1.

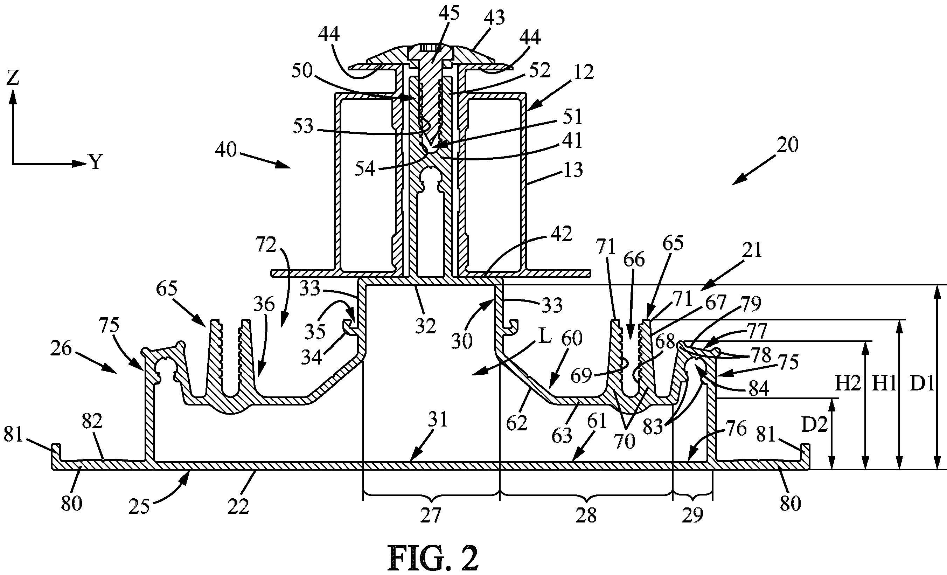

Les panneaux de récupération d'énergie solaire sont, par exemple, constitués par des panneaux photovoltaïques 10. Chaque panneau photovoltaïque 10 comprend un réseau de cellules photovoltaïques qui génèrent une énergie électrique à partir de la lumière du soleil, et un circuit électrique connecté à un réseau électrique pour transporter l'énergie électrique générée par les cellules photovoltaïques. Comme il ressort des figures 2, 3, 8 et 9, chaque panneau photovoltaïque 10 comprend une plaque 11 rectangulaire portant les cellules photovoltaïques et un cadre 12 rectangulaire maintenant la plaque 11. Le cadre 12 comprend alors deux grands montants 13 parallèles entre eux, formant deux bords opposés du panneau photovoltaïque 10, et deux petits montants 14 parallèles entre eux et perpendiculaires aux grands montants 13, formant deux autres bords opposés du panneau photovoltaïque 10. Les grands montants 13 et les petits montants 14 sont adaptés pour permettre un emmanchement de la plaque 11 de manière à en exposer une surface de captation, tout en délimitant, à l'opposé de la surface de captation de la plaque 11, un espace 15 dans lequel le circuit électrique peut être disposé.

Les panneaux photovoltaïques 10 sont disposés sur le pan 4 de la charpente 3 de manière adjacente selon les directions longitudinale X et transversale Y avec les grands montants 13 du cadre 12 qui forment des bords longitudinaux selon la direction longitudinale X, et les petits montants 14 du cadre 12 qui forment des bords transversaux selon la direction transversale Y.

Pour ce faire, les panneaux photovoltaïques 10 sont montés sur la charpente 3 du toit 2 par l'intermédiaire d'une structure de montage comprenant des rails 20 s'étendant selon la direction longitudinale X et des traverses 90 s'étendant selon la direction transversale Y pour définir un quadrillage présentant des mailles dans lesquelles les panneaux photovoltaïques 10 sont disposés.

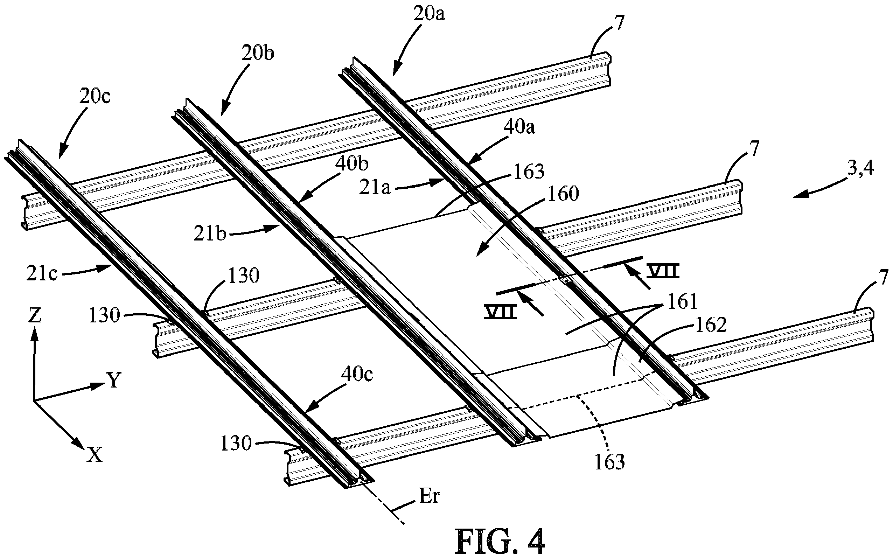

Le rail 20 représenté en section transversal sur la figure 2 et en perspective sur la figure 4 est un profilé, par exemple métallique et notamment formé par extrusion d'aluminium, qui s'étend selon une direction d'extension Er dans laquelle il présente une longueur.

Dans le mode de réalisation représenté, la direction d'extension Er du rail 20 correspond à la direction longitudinale X. Le rail 20 est décrit ci-après avec son agencement particulier dans l'installation de la figure 1, c'est-à-dire en relation avec les directions longitudinale X, transversale Y et verticale Z prédéfinies. La description est, toutefois, transposable au rail 20 selon toute autre orientation en considérant que :
- la direction longitudinale X correspond à la direction d'extension Er du rail 20,
- la direction transversale Y correspond à une première direction perpendiculaire à la direction d'extension Er du rail 20 et comprise dans un même plan de référence du rail 20 que la direction d'extension Er,
- la direction verticale Z correspond à une deuxième direction perpendiculaire au plan de référence du rail 20 et donc à la direction d'extension Er ainsi qu'à la première direction.

Le rail 20 comporte un socle 21 présentant une surface inférieure 22 plane, en particulier horizontale dans le mode de réalisation représenté, et définissant le plan de référence du rail 20. Le socle 21 s'étend sur toute la longueur du rail 20 entre des première 23 et deuxième 24 extrémités opposées, écartées l'une de l'autre selon la direction longitudinale X.

Le socle 21 du rail 20 est creux et comprend des première 25 et deuxième 26 parois délimitant entre elles un logement L qui s'étend sur toute la longueur du rail 20 et qui est ouvert selon la direction longitudinale X aux première 23 et deuxième 24 extrémités du rail 20.

La première paroi 25 est horizontale et porte la surface inférieure 22 du socle 21.

La deuxième paroi 26 est solidarisée à la première paroi 25 à l'opposé de la surface inférieure 22 du socle 21. La deuxième paroi 26 est conformée pour que le socle 21 comprenne :
- une première partie 27, centrale, s'étendant selon la direction verticale Z,
- deux deuxièmes parties 28 s'étendant de part et d'autre de la première partie 27 selon la direction transversale Y, et
- deux troisièmes parties 29 s'étendant selon la direction verticale Z, chacune des troisièmes parties 29 étant adjacente, selon la direction transversale Y, à l'une des deuxièmes parties 28, à l'opposé de la première partie 27.

Dans le mode de réalisation représenté, le rail 20 présente une symétrie par rapport à un plan vertical XZ médian. Seules l'une des deuxièmes parties 28 et l'une des troisièmes parties 29 seront décrites, les descriptions étant directement transposable aux autres deuxième 28 et troisième 29 parties. Il est à noter, à cet égard, que dans d'autres modes de réalisation, le socle 21 pourrait ne comprendre qu'une seule deuxième partie 28 et/ou une seule troisième partie 29.

En particulier, la deuxième paroi 26 comporte une nervure centrale 30 agencée en regard et à une première distance D1, mesurée selon la direction verticale Z par rapport à la surface inférieure 22 du socle 21, d'une première portion 31 de la première paroi 25 avec laquelle elle forme la première partie 27 du socle 21. La nervure centrale 30 est formée d'une plateforme 32 située dans un plan horizontal XY et placée à la distance D1, et de deux parois verticales 33 situées dans des plans verticaux XZ et s'étendant depuis la plateforme 32 vers la première paroi 25. Chacune des parois verticales 33 de la nervure centrale 30 porte, sur une surface extérieure opposée au logement L, une saillie 34 pourvue d'une rainure 35 ouverte selon la direction verticale Z.

La première partie 27 du socle 21 porte une partie de maintien 40 s'étendant sur toute la longueur du rail 20 et adaptée pour assurer un maintien du panneau de récupération 10.

La partie de maintien 40 comprend une barre de fixation 41 qui s'étend selon la direction verticale Z depuis la plateforme 32 de la nervure centrale 30, et contre laquelle l'un des grands montants 13 du panneau de récupération 10 peut venir en contact. De part et d'autre de la barre de fixation 41, des surfaces extérieures de la plateforme 32 forment deux surfaces d'appui 42 horizontales sur chacune desquelles l'un des grands montants 13 de deux panneaux de récupération 10 adjacents peut reposer.

La barre de fixation 41 est adaptée pour permettre la fixation d'un profilé de contre-appui assurant un maintien du panneau de récupération 10 sur le rail 20 et/ou une étanchéité entre le panneau de récupération 10 et le rail 20.

Sur la figure 2, le profilé de contre-appui est un profilé de bridage 43 présentant des surfaces de contre-appui 44 horizontales adaptées pour venir en appui sur les grands montants 13 du panneau de récupération 10 à l'opposé des surfaces d'appui 42.

Le profilé de bridage 43 est fixé à la barre de fixation 41 au moyen d'un ou plusieurs éléments de fixation présentant un filetage, tels que des vis 45. Pour ce faire, la barre de fixation comprend une paire centrale de parois de fixation 50 pourvue d'une gorge de vissage 51 ouverte selon la direction verticale Z, à l'opposé de la surface inférieure 22 du socle 21. La gorge de vissage 51 est adaptée pour recevoir les vis 45 et coopérer avec leur filetage. En particulier, la paire centrale de paroi de fixation 50 comprend deux parois 52 s'étendant sur toute la longueur du rail 20, sensiblement selon la direction verticale Z, et présentant respectivement deux surfaces intérieures 53 en regard délimitant la gorge de vissage 51. Les surfaces intérieures 53 sont pourvues respectivement de séries de rainure 54 agencées pour coopérer avec le filetage des vis 45. Chacune des séries de rainure 54 comprend une ou plusieurs rainures 54 s'étendant selon la direction longitudinale X. Des mêmes vis 45 peuvent ainsi être utilisées pour l'assemblage des profilés de bridage 43 aux rails 20 de toute la structure de montage. En outre, l'assemblage précité ne nécessite pas un positionnement relatif précis des profilés de bridage 43 par rapport aux rails 20. Le montage de la structure de montage s'en trouve simplifié

La deuxième paroi 26 du socle 21 comporte également un flasque latéral 60 adjacent, selon la direction transversale Y, à la nervure centrale 30. Le flasque latéral 60 est agencé en regard et à une deuxième distance D2, mesurée selon la direction verticale Z par rapport à la surface inférieure 22 du socle 21, d'une deuxième portion 61 de la première paroi 25 avec laquelle il forme la deuxième partie 28 du socle 21. La deuxième distance D2 est inférieure à la première distance D1 de la plateforme 32 de la nervure centrale 30. Le flasque latéral 60 comporte une portion de liaison 62 adjacente à l'une des parois verticales 33 de la nervure centrale 30 et une portion de fixation 63 qui s'étend depuis la portion de liaison 62, à distance, selon la direction transversale Y, de la partie de maintien 40 du rail 20. La portion de liaison 62 est inclinée depuis la paroi verticale 33 de la nervure centrale 30 vers la première paroi 25 du socle 21 et la portion de fixation 63 est horizontale et placée à la distance D2 de la surface inférieure 22 du socle 21.

La portion de fixation 63 porte une paire latérale de parois de fixation 65 pour fixer la traverse 90 au rail 20. Comme pour la paire centrale de parois de fixation 50, la paire latérale de parois de fixation 65 est pourvue d'une gorge de vissage 66 ouverte selon la direction verticale Z, à l'opposé de la surface inférieure 22 du socle 21. La gorge de vissage 66 est adaptée pour recevoir des vis, de préférence les mêmes vis 45 que celles utilisées pour la fixation du profilé de bridage 43 au rail 20, et coopérer avec leur filetage. En particulier, la paire latérale de parois de fixation 65 comprend deux parois 67 s'étendant sur toute la longueur du rail 20, sensiblement selon la direction verticale Z, et présentant respectivement deux surfaces intérieures 68 en regard délimitant la gorge de vissage 66. Les surfaces intérieures 68 sont pourvues respectivement d'au moins deux rainures 69 agencées pour coopérer avec le filetage des vis 45. Les parois 67 de la paire latérale de parois de fixation 65 présentent des premières extrémités 70 respectives solidaires de la portion de fixation 63 et ainsi agencées à proximité, selon la direction verticale Z, de la surface inférieure 22 du socle 21, et des deuxièmes extrémités respectives 71, libres, placées à une première hauteur H1, selon la direction verticale Z, de la surface inférieure 22 du socle 21. La première hauteur H1 est comprise entre les première D1 et deuxième D2 distances précitées.

La partie de maintien 40 du rail 20, et en particulier la nervure centrale 30, et la paire latérale de parois de fixation 65, et en particulier la paroi 67 en regard de la nervure centrale 30, délimitent sur la deuxième partie 28 du socle une conduite de drainage 72.

La deuxième paroi 26 du socle 21 comporte en outre une nervure latérale 75 adjacente, selon la direction transversale Y, au flasque latéral 60, à l'opposé de la nervure centrale 30. La nervure latérale 75 est agencée en regard et à une deuxième hauteur H2, selon la direction verticale Z, d'une troisième portion 76 de la première paroi 25 avec laquelle elle forme la troisième partie 29 du socle 21. La deuxième hauteur H2 est comprise entre les première D1 et deuxième D2 distances précitées, en étant inférieure à la première hauteur H1 de la paire latérale de parois de fixation 65.

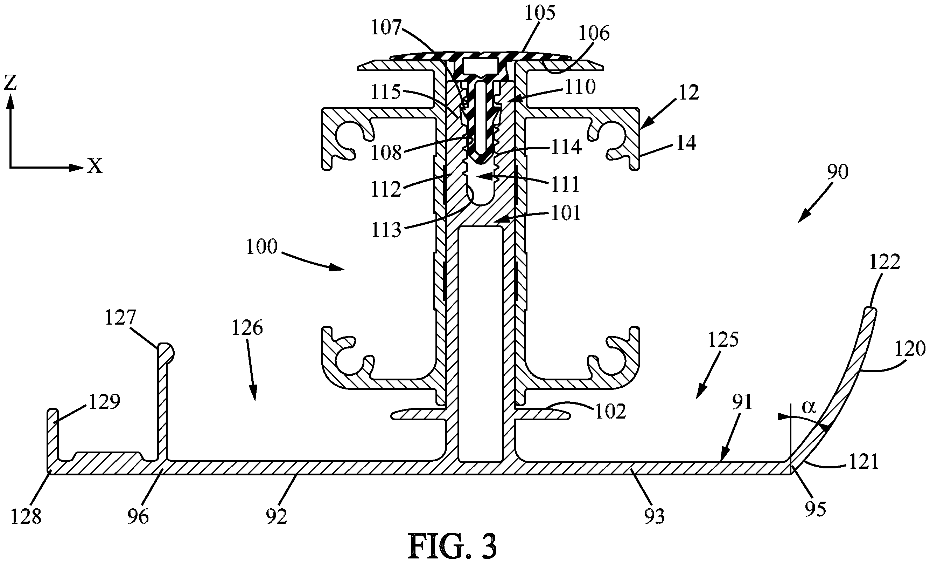

La nervure latérale 75 s'étend selon la direction verticale Z jusqu'à une extrémité libre 77 ayant une concavité dirigée à l'opposé de la surface inférieure 22 du socle 21. En particulier, l'extrémité libre 77 de la nervure latérale 75 présente deux bordures longitudinales 78, par exemple arrondies, écartées l'une de l'autre selon la direction transversale Y et une surface centrale 79 interposée entre les bordures longitudinales 78. Les bordures longitudinales 78 sont en saillie selon la direction verticale Z par rapport à la surface centrale 79. Sur la figure 3, l'extrémité libre 77 de la nervure latérale 75 est inclinée par rapport à un plan horizontal XY de sorte que la bordure longitudinale 78 située du côté de la partie de maintien 40 est agencé à une distance, selon la direction verticale Z, de la surface inférieure 22 du socle 21 supérieure à celle de l'autre bordure longitudinale 78.

Le logement L présente une section transversale sensiblement en forme de W avec deux espaces verticaux latéraux, formés respectivement dans les troisièmes parties 29 du socle 21, de part et d'autre d'un espace vertical central, formé dans la première partie 27 du socle 21, et deux espaces transversaux, formés respectivement dans les deuxièmes parties 28 du socle 21, reliant les espaces verticaux latéraux à l'espace vertical central. Chacun des espaces verticaux latéraux comporte une portion arrondie 84 autour d'un axe s'étendant selon la direction longitudinale X, au voisinage de l'extrémité libre 77 de la nervure latérale 75. Deux bourrelets 83 en regard sont alors formés sur une surface intérieure dirigée vers le logement L de la nervure latérale 75, à distance de l'extrémité libre 77, pour délimiter la portion arrondie 84.

Pour fixer le socle 21 aux pannes 7 de la charpente 3, la première paroi 25 du socle 21 se prolonge transversalement par rapport aux troisièmes parties 29 par des bras 80 présentant chacun une extrémité pourvue d'un rebord 81 selon la direction verticale Z. Un élément de repérage, utilisé pour la mise en place du rail 20 sur la charpente 3, se présente sous la forme d'une rainure en V 82 ménagée de manière centrale dans chacun des bras 80.

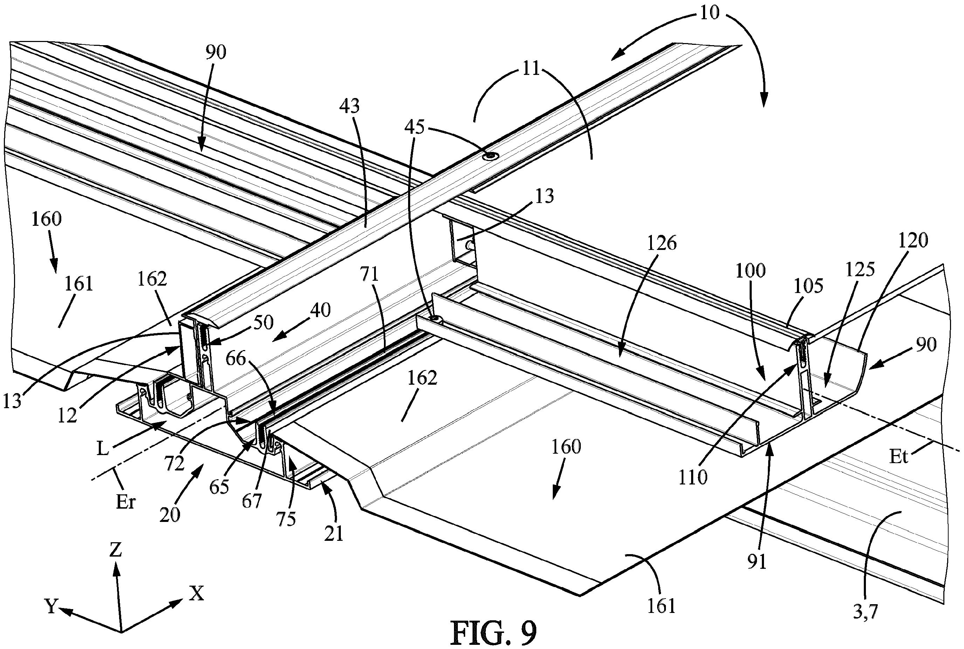

La traverse 90 représentée en section transversale sur la figure 3 et en perspective sur la figure 9 est un profilé, par exemple métallique et notamment formé par extrusion d'aluminium, qui s'étend selon une direction d'extension Et dans laquelle elle présente une longueur.

Dans le mode de réalisation représenté, la direction d'extension Et de la traverse 90 correspond à la direction transversale Y et, comme pour le rail 20, la traverse 90 est décrite ci-après en relation avec les directions longitudinale X, transversale Y et verticale Z prédéfinies. La description pourra également être transposée à la traverse 90 selon toute autre orientation en considérant que :
- la direction transversale Y correspond à la direction d'extension Et de la traverse 90,
- la direction longitudinale X correspond à une première direction perpendiculaire à la direction d'extension Et de la traverse 90 et comprise dans un même plan de référence de la traverse 90 que la direction d'extension Et,
- la direction verticale Z correspond à une deuxième direction perpendiculaire au plan de référence de la traverse 90 et donc à la direction d'extension Et ainsi qu'à la première direction.

La traverse 90 comporte une base 91 présentant une surface inférieure 92 plane, en particulier horizontale dans le mode de réalisation représenté, et définissant le plan de référence de la traverse 90. La base 91 s'étend sur toute la longueur de la traverse 90 et comprend une paroi 93 horizontale portant la surface inférieure 92 de la traverse 90. La paroi 93 présente des premier 95 et deuxième 96 bords écartés l'un de l'autre selon la direction longitudinale X et s'étendant sur toute la longueur de la traverse 90.

La base 91 de la traverse 90 porte, sur une surface supérieure opposée à la surface inférieure 92, une partie de maintien 100 s'étendant sur toute la longueur de la traverse 90 et adaptée pour assurer un maintien du panneau de récupération 10.

La partie de maintien 100 est agencée à distance, selon la direction longitudinale X, des premier 95 et deuxième 96 bords de la paroi 93, par exemple sensiblement à équidistance de ces bords. De manière analogue à la partie de maintien 40 du rail 20, la partie de maintien 100 de la traverse 90 comprend une barre de fixation 101 qui s'étend selon la direction verticale Z depuis la paroi 93, et contre laquelle l'un des petits montants 14 du panneau de récupération 10 peut venir en contact. Deux surfaces d'appui 102 horizontales sur chacune desquelles l'un des petits montants 14 de deux panneaux de récupération 10 adjacents peut reposer s'étendent depuis la barre de fixation 101, de part et d'autre de celle-ci.

La barre de fixation 101 est également adaptée pour permettre la fixation d'un profilé de contre-appui assurant un maintien du panneau de récupération 10 sur la traverse 90 et/ou une étanchéité entre le panneau de récupération 10 et la traverse 90.

Sur la figure 3, le profilé de contre-appui est un profilé d'étanchéité 105 présentant des surfaces de contre-appui 106 horizontales adaptées pour venir en appui sur les petites montants 14 du panneau de récupération 10 à l'opposé des surfaces d'appui 102. En variante, le profilé d'étanchéité 105 pourrait être remplacé par un profilé de bridage analogue à celui monté sur le rail 20. De même, le profilé de bridage 43 monté sur le rail 20 pourrait être remplacé par un profilé d'étanchéité analogue à celui monté sur la traverse 90.

La barre de fixation 101 comprend une paire centrale de parois de fixation 110 pourvue d'une gorge de vissage 111 ouverte selon la direction verticale Z, à l'opposé de la surface inférieure 92 de la traverse 90. La gorge de vissage 111 est adaptée pour recevoir des vis, de préférence les mêmes vis 45 que celles utilisées pour la fixation du profilé de bridage 43 au rail 20 et de la traverse 90 au rail 20, et coopérer avec leur filetage. En particulier, la paire centrale de parois de fixation 110 comprend deux parois 112 s'étendant sur toute la longueur de la traverse 90, sensiblement selon la direction verticale Z, et présentant respectivement deux surfaces intérieures 113 en regard délimitant la gorge de vissage 111. Les surfaces intérieures 113 sont pourvues respectivement de rainures 114 agencées pour coopérer avec le filetage des vis 45.

Le profilé d'étanchéité 105, et le cas échéant le profilé de bridage, peut ainsi être fixé à la barre de fixation 101 de la traverse 90 au moyen d'une ou plusieurs vis 45 s'étendant dans la gorge de vissage 111.

Dans le mode de réalisation, on prévoit, toutefois, que le profilé d'étanchéité 105 soit encliqueté dans la gorge de vissage 111 de la paire centrale de parois de fixation 110. Ainsi, les rainures 114 des parois 112 sont surmontées d'encoches 115 respectives adaptées pour recevoir des ergots 107 formés sur une ou plusieurs tiges 108 du profilé d'étanchéité 105, lesquelles tiges 108 sont insérées dans la gorge de vissage 111.

La traverse 90 comporte en outre une aile 120 portée par la base 92 en regard de la partie de maintien 100. L'aile 120 s'étend entre une première extrémité 121 reliée au premier bord 95 de la paroi 93 de la base 91 et une deuxième extrémité 122 distante de la base 91 selon la direction verticale Z. La deuxième extrémité 122 est placée à une distance, selon la direction verticale Z, de la base 91 supérieure à celle des surfaces d'appui 102. L'aile 120 de la traverse 90 est inclinée par rapport à la direction verticale d'angle a, compris entre 10 et 45 °, de préférence entre 20° et 35 °, en s'écartant de la barre de fixation 101. La deuxième extrémité 122 est alors placée à une distance, selon la direction longitudinale X, de la partie de maintien 100 plus grande que celle de la première extrémité 121. L'aile 120 présente, par ailleurs, entre ses première 121 et deuxième 122 extrémités, une courbure, de rayon de courbure constant dans le mode de réalisation représenté, dirigée vers la barre de fixation 101 de la partie de maintien 100. Sur la figure 3, l'aile 120 a une épaisseur constante entre une surface intérieure présentant une concavité tournée vers la partie de maintien 100, et une surface extérieure présentant une convexité tournée à l'opposé de la partie de maintien 100.

La partie de maintien 100 de la traverse 90, et en particulier la barre de fixation 101, et l'aile 120 délimitent sur la base 91 une conduite de drainage 125. La traverse 90 comporte une autre conduite de drainage 126 délimitée par la partie de maintien 100 et une paroi latérale 127 s'étendant verticalement depuis la deuxième extrémité 96 de la paroi 93.

Pour fixer la traverse 90 au rail 20, la paroi 93 de la base 90 se prolonge selon la direction longitudinale X depuis la deuxième extrémité 96 par un bras 128 présentant une extrémité pourvue d'un rebord 129 selon la direction verticale Z.

En relation avec les figures 4 à 9, on décrit un procédé de montage du système de récupération d'énergie solaire sur la charpente 3 du toit 2.

Sur la figure 4, des premier 20a, deuxième 20b et troisième 20c rails sont montés sur les pannes 7 du pan 4 de telle manière que la direction d'extension Er, matérialisée sur les rails 20a, 20b, 20c par les rainures en V 82, de chacun des rails 20a, 20b, 20c soit alignée avec la direction longitudinale X, matérialisée par exemple par un cordeau s'étendant entre le faîte F du toit 2 et le point le plus bas du pan 4 sur lequel les rails 20a, 20b, 20c sont montés. Les rails 20a, 20b, 20c s'étendent alors dans le sens de la pente, les surfaces inférieures 22 de leurs socles 21 a, 21 b, 21 c reposant sur les pannes 7. Les rails 20a, 20b, 20c sont écartés les uns des autres selon la direction transversale Y d'une distance correspondant sensiblement à une largeur du panneau de récupération 10 de manière à ce que les grands montants 14 du cadre 12 du panneau de récupération 10 puissent reposer sur les surfaces d'appui 42 de deux rails 20 adjacents.

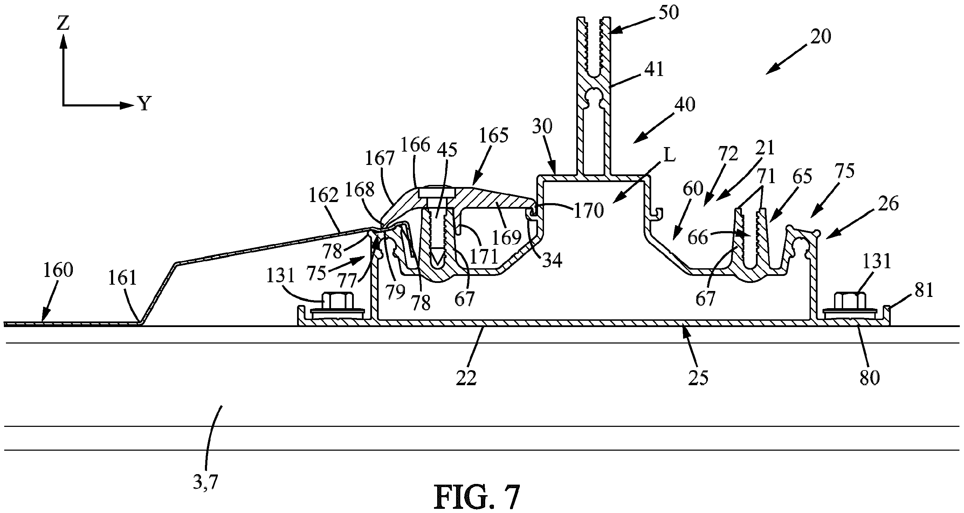

Les rails 20a, 20b, 20c sont ensuite fixés aux pannes 7. En particulier, deux organes de fixation, sous la forme de boulons 131 visibles sur la figure 7, traversent les bras 80 de chacun des socles 21 a, 21 b, 21 c pour s'étendre dans l'une des pannes 7. Les organes de fixation par exemple agencés au voisinage du faîte F du toit 2 forment alors un point bloquant. Le long de chacun des rails 20a, 20b, 20c, plusieurs brides 130 sont fixées aux autres pannes 7 pour assurer un maintien du rail 20. Les brides 130 comprennent par exemple chacune une gorge selon la direction longitudinale X recevant le rebord 81 du bras 80 de l'un des socles 21 a, 21 b, 21 c. Un tel maintien permet d'autoriser une dilatation des rails 20a, 20b, 20c selon la direction longitudinale X.

Selon les dimensions du système de récupération d'énergie solaire 5, plusieurs rails 20 peuvent être montés bout à bout selon la direction longitudinale X.

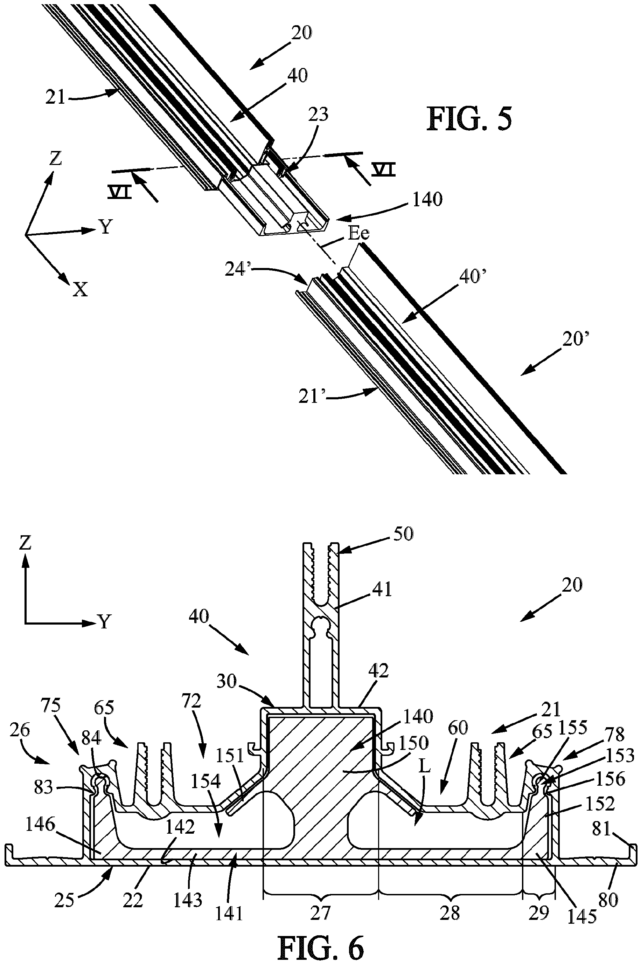

Les figures 5 et 6 illustrent le montage bout à bout de deux rails 20, 20' par l'intermédiaire d'une éclisse 140 adaptée pour être insérée dans une portion du logement L du socle 21 de l'un 20 des rails par la première extrémité 23 et dans une portion du logement L' du socle 21' de l'autre rail 20' par la deuxième extrémité 24'.

L'éclisse 140 est un profilé, par exemple métallique et notamment formé par extrusion d'aluminium, qui s'étend selon une direction d'extension Ee dans laquelle elle présente une longueur. Dans l'agencement représenté, la direction d'extension Ee de l'éclisse 140 correspond à la direction d'extension Er du rail et à la direction longitudinale X. Comme pour le rail 20, la description qui suit de l'éclisse 140 faite en relation avec les directions longitudinale X, transversale Y et verticale Z est aisément transposable à toute autre orientation de l'éclisse 140, en utilisant des correspondances de direction analogues à celles définies pour le rail 20.

L'éclisse 140 comporte un pied 141 présentant une surface inférieure 142 plane, en particulier horizontale dans le mode de réalisation représenté, et définissant un plan de référence de l'éclisse 140. Le pied 141 s'étend sur toute la longueur de l'éclisse 140 et comprend une paroi 143 horizontale portant la surface inférieure 142 de l'éclisse 140. La paroi 143 présente des premier 145 et deuxième 146 bords écartés l'un de l'autre selon la direction transversale Y et s'étendant sur toute la longueur de l'éclisse 140.

Le pied 141 de l'éclisse 140 porte, sur une surface supérieure opposée à la surface inférieure 142, une âme 150 s'étendant sur toute la longueur de l'éclisse 140.

L'âme 150 s'étend selon la direction verticale Z et est agencée à distance, selon la direction transversale Y, des premier 145 et deuxième 146 bords de la paroi 143, par exemple sensiblement à équidistance de ces bords. L'âme 150 de l'éclisse 140 comprend deux languettes 151 inclinées respectivement vers les premier 145 et deuxième 146 bords du pied 141. Les languettes 151 présentent une inclinaison correspondant à celles des portions de liaison 62 des flasques latéraux 60 du socle 21 du rail 20.

L'éclisse 140 comporte en outre deux ailes 152 s'étendant sur toute la longueur de l'éclisse 140, en regard et à distance, selon la direction transversale Y, de l'âme 150. En particulier, les ailes 152 s'étendent selon la direction verticale Z respectivement depuis les premier 145 et deuxième 146 bords du pied 141 jusqu'à des extrémités libres 153 respectives. Les extrémités libres 153 comportent chacune une tête arrondie 155 autour d'un axe s'étendant selon la direction longitudinale X. La tête arrondie 155 est reliée au reste de l'aile 152 par une portion rétrécie 156. L'âme 150 de l'éclisse 140 et chacune des ailes 152 délimitent sur le pied 141 une conduite de drainage 154.

L'éclisse 140 présente une section transversale sensiblement en W, correspondant la section transversale du logement L du socle 21 du rail 20. L'éclisse présente alors une inertie sensiblement identique à celle du rail 20.

L'éclisse 140 peut alors être placée dans le logement L du rail 20 avec la surface inférieure 142 du pied 141 qui repose sur la première paroi 25 du socle 21.

Le pied 141 est placé dans l'espace vertical central et les espaces transversaux du logement L. Les conduites de drainage 154 du pied 141 de l'éclisse 140 sont placées en correspondance selon la direction verticale Z avec les conduites de drainage 72 du rail 20, un espace libre étant ménagé entre le pied 141 de l'éclisse 140 et le flasque latéral 60 de chacune des deuxièmes parties 28 du socle 21. En particulier, le pied 141 est dimensionné pour que l'espace libre occupe l'essentiel de chacun des espaces transversaux du logement L.

L'âme 150 est placée dans l'espace vertical central du logement L et s'étend dans la nervure centrale 30. L'âme 150 est dimensionnée pour occuper l'essentiel de l'espace vertical central du logement L. Les languettes de l'âme 150 s'étendent parallèlement et au voisinage des portions de liaison 62 des flasques latéraux 60 des deuxièmes parties 28 du socle 21.

Les ailes 152 sont placées dans les espaces verticaux latéraux du logement L, les ailes 152 étant dimensionnées pour occuper l'essentiel de ces espaces. Les têtes arrondies 155 des ailes 152 sont placées dans les portions arrondies 84 des espaces verticaux latéraux, les portions rétrécies 156 des ailes 152 s'étendant entre les bourrelets 83 de la nervure latérale 75.

L'éclisse 140 ainsi disposée et fixée à l'un et/ou l'autre rails 20, 20' permet d'assurer une continuité mécanique dans la reprise des efforts entre les rails 20, 20', et une continuité de drainage en mettant en communication de fluide les conduites de drainage 72 du rail 20 situé en amont avec le logement L' du rail 20' situé en aval pour drainer l'eau s'infiltrant entre les rails 20, 20'.

Comme représenté sur les figures 4 et 7, pour des raisons de sécurité, la structure de montage comprend un dispositif de remplissage 160 interposé entre deux rails 20 adjacents, notamment entre le premier rail 20a et le deuxième rail 20b sur la figure 4. Le dispositif de remplissage 160 est adapté pour satisfaire aux exigences d'un essai de résistance aux chocs, et notamment à l'essai 1200 joules en retenant une masse de 50 kg lâchée d'une hauteur de 2,40 m pour simuler la chute d'un corps.

Dans le mode de réalisation, le dispositif de remplissage comprend une ou plusieurs plaques de tôle 161 déformables et de faible épaisseur selon la direction verticale Z par rapport à des dimensions mesurées selon les directions longitudinale X et transversale Z. Les plaques de tôle 161 sont, par exemple, rectangulaires et présentent deux bords longitudinaux 162 opposés et deux bords transversaux 163 opposés. Dans d'autres modes de réalisation, tout autre dispositif de remplissage, notamment du type comprenant une grille, une voûte, un barreaudage ou autre, peut être prévu. Au moins les bords longitudinaux 162 du dispositif de remplissage 160 sont alors de préférence déformables et de faible épaisseur.

Les deux nervures latérales 75 du socle 21 de chacun des rails 20a, 20b, 20c forment respectivement deux organes de bridage disposés de part et d'autre de la partie de maintien 40 pour fixer l'une des plaques de tôle 161 au rail 20.

En particulier, sur la figure 4, deux plaques de tôle 161 sont placées entre les premiers 20a et deuxième 20b rails, avec un chevauchement, les bords longitudinaux 162 des plaques de tôle 161 reposant sur les extrémités libres 77 des nervures latérales 75 en regard des socles 21 a, 21 b.

La structure de montage comprend alors une ou plusieurs brides 165 fixées chacune à l'un des rails 20, par exemple le premier rail 20a, et adaptées chacune pour venir en appui sur le bord longitudinal 162 de la plaque de tôle 161, à l'opposé de l'organe de bridage formé par la nervure latérale 75 du rail 20a.

Comme représenté sur la figure 7, la bride 165 comprend une partie de fixation 166 horizontale et une partie d'appui 167 s'étendant selon la direction transversale Y depuis la partie de fixation 166, en étant inclinée par rapport à celle-ci, jusqu'à une extrémité libre comportant une arête168. A l'opposé de la partie d'appui 167, la bride 165 comprend une extension 169 s'étendant depuis la partie de fixation 166 selon la direction transversale Y jusqu'à une extrémité libre pourvue d'une saillie d'accrochage 170. Une lèvre 171 s'étend selon la direction verticale Z sensiblement en regard de la partie d'appui 167.

La bride 165 est placée sur le socle 21 avec l'extension 169 solidarisée à la partie de maintien 40 du rail 20 par l'intermédiaire de la saillie d'accrochage 170 placée dans la rainure 35 de la saillie 34 portée par la nervure centrale 30. La partie de fixation 166 est positionnée sur les deuxièmes extrémités 71 des parois 67 de la paire latérale de parois de fixation 65 du rail 20, la lèvre 171 venant en contact avec la paroi 67 placée du côté de la partie de maintien 40.

Pour fixer la bride 165, une vis 45, identique à celles précédemment décrites, traverse la partie de fixation 166, par exemple en passant au travers d'un alésage, et s'étend dans la gorge de vissage 66 de la paire latérale de parois de fixation 65. La partie de fixation 166 de la bride 165 fixée à la paire latérale de parois de fixation 65 est placée à la première hauteur H1, la partie d'appui 167 étant inclinée vers la nervure latérale 75 formant l'organe de bridage et située à la deuxième hauteur H2, inférieure à la première hauteur H1.

Au fur et à mesure du vissage de la vis 45 dans la gorge de vissage 66, la bride 165 est serrée sur le socle 21 et l'arête 168 de la partie d'appui 167 s'enfonce dans la concavité formée dans l'extrémité libre 77 de la nervure latérale 75. Ce faisant, du fait de l'appui de l'arête 168 de la partie d'appui 167 entre les bordures longitudinales 78 de la nervure latérale 75 sur lesquelles repose le bord longitudinal 162 de la plaque de tôle 161, le bord longitudinal 162 se déforme jusqu'à présenter une concavité placée dans la concavité de l'extrémité libre 77 de la nervure latérale 75 en regard de l'arête 168 de la partie d'appui 167 de la bride 165.

Des plaques de tôle 161 sont ainsi montées dans les espaces existants entre les premier 20a, deuxième 20b et troisième 20c rails.

Le montage des dispositifs de remplissage 160 réalisé par bridage, et donc notamment sans perçage, permet d'améliorer la fixation des dispositifs de remplissage 160 et donc leur résistance aux chocs. Il permet également de simplifier le montage du système de récupération d'énergie solaire 5.

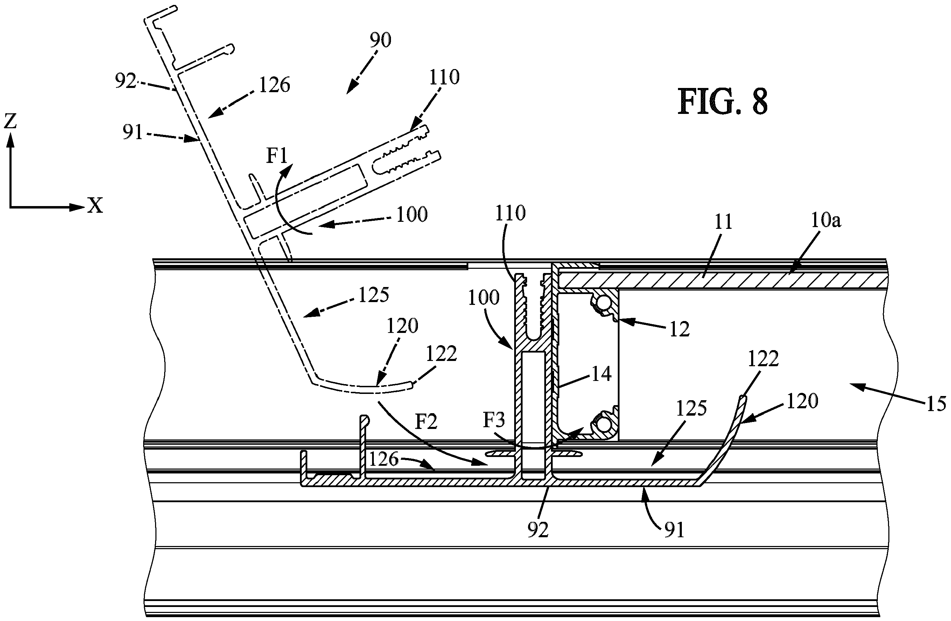

Sur la figure 8, une fois les plaques de tôle 161 mises en place, les panneaux de récupération 10a situés en aval par rapport au sens de la pente, c'est-à-dire à distance du faîte F du toit 2, sont placés entre les rails 20a, 20b, 20c en recouvrant les plaques de tôle 161. Les grands montants 14 du cadre 12 de chacun des panneaux de récupération 10a reposent sur les surfaces d'appui 42 de deux rails 20 adjacents, les surfaces de captation des plaques 11 étant dirigées à l'opposée de la charpente 3 et les espaces 15 des cadres 12 étant en regard de la charpente 3.

Après que les panneaux de récupération 10a aval ont été montés sur les rails 20, les traverses 90 sont à leur tour montées sur les rails 20.

En particulier, pour mettre en place la traverse 90, celle-ci est positionnée de telle manière que la direction d'extension Et de la traverse 90 soit parallèle à la direction transversale Y. La traverse 90 est ensuite inclinée dans un sens autour d'un axe parallèle à la direction transversale Y (flèche F1). La traverse 90 se trouve alors dans une première position, représentée en trait mixte sur la figure 8, dans laquelle l'aile 120 s'étend sensiblement au voisinage d'un plan horizontal XY. Dans cette première position, la deuxième extrémité 122 de l'aile 120 est introduite sous le bord transversal 14 du cadre 12 du panneau de récupération 10a, et on fait passer l'aile 120 sous le bord transversal 14 du panneau de récupération 10a (flèche F2). La traverse 90 est ensuite inclinée dans l'autre sens autour de l'axe parallèle à la direction transversale Y (flèche F3). La traverse 90 se trouve alors dans une deuxième position, représentée en trait plein sur la figure 8, dans laquelle la surface inférieure 92 de la base 91 est horizontale et l'aile 120 de la traverse 90 est disposée dans l'espace 15 du panneau de récupération 10a.

Dans cette position, la surface inférieure 92 de la base 91 de la traverse 90 repose sur le rail 20 et la base 91 de la traverse 90 est fixée au rail 20, le petit montant 14 du panneau de récupération 10 reposant sur la surface d'appui 102 de la traverse 90.

Les panneaux de récupération 10b, 10c et les traverses 90 sont ainsi montées à l'avancement sur les rails 20. Après que l'ensemble des panneaux de récupération 10 et des traverses 90 a été mis en place, les profilés d'étanchéité 105 sont fixés sur les traverses 90 et les profilés de bridage 43 sont fixés sur les rails 20.

La figure 9 est une vue en coupe selon deux plans transversaux perpendiculaire entre eux d'une partie de l'installation 1 à la fin du montage décrit ci-dessus, dans laquelle deux panneaux de récupération 10 n'ont pas été représentés pour faire apparaître le positionnement relatif de l'un des rails 20 et deux traverses 90 s'étendant de part et d'autre du rail 20.

Comme il apparaît sur la figure 9, la surface inférieure 92 de la base 91 de chacune des traverses 90 dans sa deuxième position repose sur les deuxièmes extrémités 71 des parois 67 de l'une des paires latérales de parois de fixation 65 du rail 20. La traverse 90 est alors fixée au rail 20 par la vis 45 traversant le bras 128 de la base 90 et s'étendant dans la gorge de vissage 66 de la paire latérale de parois de fixation 65.

Comme il apparaît également sur la figure 9, les conduites de drainage 125, 126 de la traverse 90 débouchent dans l'une des conduites de drainage 72 du rail 20 pour évacuer l'eau s'infiltrant entre la structure de montage et les panneaux de récupération 10 vers une gouttière 8 placée sur le pan 4 de la charpente 3 à l'extrémité opposée au faîte F.

La description du montage du système de récupération d'énergie solaire 5 a été faite en relation avec un montage réalisé directement sur la charpente 3 à partir d'un ou plusieurs kits rassemblant l'ensemble des composants décrits précédemment de la structure de montage, les composants étant séparés les uns des autres dans chacun des kits. En variante, la structure de montage pourrait être pré-assemblée à partir des mêmes kits puis fixée à la charpente 3.

## Revendications

1. Structure de montage pour monter au moins deux panneaux de récupération d'énergie solaire (10) sur un bâti (3), chacun desdits panneaux de récupération (10) présentant au moins un bord (13), ladite structure de montage comprenant :
- au moins deux rails (20, 20') s'étendant selon une direction longitudinale (X) d'un plan horizontal (P), chacun desdits rails (20, 20') comportant :
un socle (21) présentant une surface inférieure (22) horizontale destinée à reposer sur le bâti (3) et des première (23) et deuxième (24) extrémités opposées, écartées l'une de l'autre selon la direction longitudinale (X), ledit socle (21) comportant intérieurement un logement (L) ouvert selon la direction longitudinale (X) aux première (23) et deuxième (24) extrémités, ledit socle (21) étant destiné à être fixé au bâti (3),
une partie de maintien (40) portée par le socle (21) et s'étendant selon une direction verticale (Z) perpendiculaire au plan horizontal (P), à l'opposé de la surface inférieure (22) du socle (21), ladite partie de maintien (40) présentant au moins une surface d'appui (42) horizontale sur laquelle l'un, longitudinal (13), des bords des panneaux de récupération (10) est destiné à reposer,
- au moins une éclisse (140) s'étendant selon la direction longitudinale (X) et adaptée pour être insérée dans une portion du logement (L) du socle (21) de l'un des rails (20) par la première extrémité (23) et dans une portion du logement (L') du socle (21') de l'autre rail (20') par la deuxième extrémité (24'),
ladite structure de montage étant **caractérisée en ce que** le socle (21, 21') de chacun des rails (20, 20') comprend une première partie (27) s'étendant selon la direction verticale (Z) et portant la partie de maintien (40), et au moins une deuxième partie (28) s'étendant depuis la première partie (27) selon une direction transversale (Y) du plan horizontal (P), perpendiculaire aux directions longitudinale (X) et verticale (Z), lesdites première (27) et deuxième (28) parties du socle (21) portant la surface inférieure (22), le logement (L) étant formé dans les première (27) et deuxième (28) parties, et
**en ce que** l'éclisse (140) comporte :
un pied (141) présentant une surface inférieure (142) horizontale reposant sur le socle (21) et un bord (145, 146), ledit pied (141) étant placé dans la portion du logement (L) formée dans les première (27) et deuxième (28) parties du socle de chacun des rails (20, 20'),
une âme (150) portée par le pied (141) et s'étendant selon la direction verticale (Z), ladite âme (150) étant agencée à distance, selon la direction transversale (Y), du bord (145, 146) du pied (141), l'âme (150) étant placée dans la portion du logement (L) formée dans la première partie (27) du socle (21) de chacun des rails (20, 20').

2. Structure de montage selon la revendication 1, dans laquelle l'âme (150) de l'éclisse (140) occupe l'essentiel de la portion du logement (L) formée dans la première partie (27) du socle (21).

3. Structure de montage selon la revendication 1 ou 2, dans laquelle chacun des rails (20, 20') comporte en outre au moins une conduite de drainage (72) délimitée par la partie de maintien (40) et une paroi (67) portée par la deuxième partie (28) du socle (21) à distance, selon la direction transversale (Y), de la partie de maintien (40), ladite paroi (67) s'étendant sensiblement selon direction verticale (Z), à l'opposé de la surface inférieure (22) du socle (21), le pied (141) comportant une conduite de drainage (154) agencée en correspondance selon la direction verticale (Z) avec la conduite de drainage (72) de chacun des rails (20, 20').

4. Structure de montage selon l'une quelconque des revendications 1 à 3, dans laquelle le socle (21) de chacun des rails (20, 20') comprend des première (25) et deuxième (26) parois délimitant entre elles le logement (L), la première paroi (25) étant horizontale et portant la surface inférieure (22) du socle (21) et la deuxième paroi (26) comportant une nervure centrale (30) et au moins un flasque latéral (60) adjacent, selon la direction transversale (Y), à la nervure centrale (30), la nervure centrale (30) étant agencée en regard et à une première distance (D1), selon la direction verticale (Z), d'une première portion (31) de la première paroi (25) avec laquelle ladite nervure centrale (30) forme la première partie (27) du socle (21), le flasque latéral (60) étant agencé en regard et à une deuxième distance (D2), selon la direction verticale (Z), d'une deuxième portion (61) de la première paroi (25) avec laquelle ledit flasque latéral (60) forme la deuxième partie (28) du socle (21), la première distance (D1) étant supérieure à la deuxième distance (D2), le pied (141) de l'éclisse (140) reposant sur la première paroi (25) et l'âme (150) de l'éclisse (140) s'étendant dans la nervure centrale (30).

5. Structure de montage selon la revendication 4, dans laquelle un espace libre est ménagé entre le pied (141) de l'éclisse (140) et le flasque latéral (60) de la deuxième paroi (26) du socle (21), l'espace libre occupant l'essentiel de la portion du logement (L) formée dans la deuxième partie (28) du socle (21).

6. Structure de montage selon la revendication 4 ou 5, dans laquelle le flasque latéral (60) de la deuxième paroi (26) du socle (21) comporte une portion de liaison (62) adjacente à la nervure centrale (30), ladite portion de liaison (62) étant inclinée vers la première paroi (25) du socle (21), l'âme (150) de l'éclisse (140) comprenant une languette (151) inclinée vers le pied (141) de l'éclisse (140) et s'étendant parallèlement et au voisinage de la portion de liaison (62).

7. Structure de montage selon l'une quelconque des revendications 1 à 6, dans laquelle le socle (21) de chacun des rails (20, 20') comprend en outre au moins une troisième partie (29) s'étendant selon la direction verticale (Z), ladite troisième partie (29) étant adjacente, selon la direction transversale (Y), à la deuxième partie (28), à l'opposé de la première partie (27), le logement (L) étant formé en outre dans la troisième partie (29), l'éclisse (140) comportant en outre au moins une aile (152) s'étendant selon la direction verticale (Z) depuis le pied (141), ladite aile (152) étant agencé à distance, selon la direction transversale (Y), de l'âme (150), ladite aile (152) s'étendant dans la portion du logement (L) formée dans la troisième partie (29) du socle (21) de chacun des rails (20, 20').

8. Structure de montage selon la revendication 7 lorsqu'elle dépend de la revendication 4, dans laquelle la deuxième paroi (26) du socle (21) comporte en outre au moins une nervure latérale (75) adjacente, selon la direction transversale (Y), au flasque latéral (60), à l'opposé de la nervure centrale (30), la nervure latérale (75) étant agencée en regard et à une hauteur (H2), selon la direction verticale (Z), d'une troisième portion (76) de la première paroi (25) avec laquelle ladite nervure latérale (75) forme la troisième partie (29) du socle (21), la hauteur (H2) étant comprise entre les première (D1) et deuxième (D2) distances, l'aile (152) de l'éclisse (140) s'étendant dans la nervure latérale (75).

9. Structure de montage selon la revendication 7 ou 8, dans laquelle l'aile (152) de l'éclisse (140) occupe l'essentiel de la portion du logement (L) formée dans la troisième partie (29) du socle (21).

10. Structure de montage selon l'une quelconque des revendications 1 à 9, dans laquelle le socle (21) de chacun des rails (20, 20') comprend deux deuxièmes parties (28) s'étendant de part et d'autre de la première partie (27).

11. Kit pour la réalisation d'une structure de montage selon l'une quelconque des revendications 1 à 10, comprenant :
- au moins deux rails (20, 20') s'étendant chacun selon une direction d'extension (Er) et comportant chacun :
un socle (21) présentant une surface inférieure (22) plane et des première (23) et deuxième (24) extrémités opposées, écartées l'une de l'autre selon la direction d'extension (Er) du rail (20), ledit socle (21) comportant intérieurement un logement (L) ouvert selon la direction d'extension (Er) du rail (20) aux première (23) et deuxième (24) extrémités,
une partie de maintien (40) portée par le socle (21) et s'étendant selon une direction perpendiculaire à la surface inférieure (22) du socle (21), à l'opposé de ladite surface inférieure (22), ladite partie de maintien (40) présentant au moins une surface d'appui (42) parallèle à la surface inférieure (22) du socle (21),
- au moins une éclisse (140) s'étendant selon une direction d'extension (Ee) de l'éclisse (140) et adaptée pour être insérée dans une portion du logement (L) du socle (21) de l'un (20) des rails par la première extrémité (23) et dans une portion du logement (L') du socle (21') de l'autre rail (20') par la deuxième extrémité (24'),
dans lequel le socle (21) de chacun des rails (20, 20') comprend une première partie (27) s'étendant selon la direction perpendiculaire à la surface inférieure (22) du socle (21) et portant la partie de maintien (40), et au moins une deuxième partie (28) s'étendant depuis la première partie (27) selon une direction perpendiculaire à la direction d'extension (Er) du rail (20), lesdites première (27) et deuxième (28) parties du socle (21) portant la surface inférieure (22), le logement (L) étant formé dans les première (27) et deuxième (28) parties, et
dans lequel l'éclisse (140) comporte :
un pied (141) présentant une surface inférieure (142) plane et un bord (145, 146),
une âme (150) portée par le pied (141) et s'étendant selon une direction perpendiculaire à la surface inférieure (142) du pied (141), ladite âme (150) étant agencée à distance, selon une direction perpendiculaire à la direction d'extension (Ee) de l'éclisse, du bord (145, 146) du pied (141).

12. Système de récupération d'énergie solaire comprenant :
- une structure de montage selon l'une quelconque des revendications 1 à 10, l'éclisse (140) étant insérée dans la portion du logement (L) du socle (21) de l'un (20) des rails par la première extrémité (23) et dans la portion du logement (L') du socle (2l') de l'autre rail (20') par la deuxième extrémité (24'), la surface inférieure (142) du pied (141) de l'éclisse (140) reposant sur les socles (21, 21'), le pied (141) de l'éclisse (140) étant placé dans la portion du logement (L) formée dans les première (27) et deuxième (28) parties du socle (21) de chacun des rails (20, 20') et l'âme (150) de l'éclisse (140) étant placée dans la portion du logement (L) formée dans la première partie (27) du socle (21) de chacun des rails (20, 20'),
- au moins deux panneaux de récupération d'énergie solaire (10), chacun desdits panneaux de récupération (10) présentant au moins un bord longitudinal (13) reposant sur la surface d'appui (42) de l'un des rails (20, 20').

13. Installation comprenant un système de récupération d'énergie solaire (5) selon la revendication 12, et un bâti (3) sur lequel la surface inférieure (22) du socle (21) du rail (20) repose et auquel le socle (21) du rail (20) est fixé.
